# EUROPÄISCHE PATENTSCHRIFT

(11) **EP 4 310 609 B1**
(45) Veröffentlichungstag und Bekanntmachung des Hinweises auf die Patenterteilung: **06.11.2024**
(21) Anmeldenummer: 23182269.3
(22) Anmeldetag: 29.06.2023
(51) Int. Cl.: G05B 19/042

(54) **DATENBEREITSTELLUNGSVORRICHTUNG**
DATA PROVISION DEVICE
DISPOSITIF DE FOURNITURE DE DONNÉES

(30) Priorität: 21.07.2022 DE 102022118215
(43) Veröffentlichungstag der Anmeldung: 24.01.2024
(73) Patentinhaber: SICK AG, 79183 Waldkirch (DE)
(72) Erfinder: Süß, Sebastian, 78176 Blumberg (DE)
(74) Vertreter: Manitz Finsterwald Patent- und Rechtsanwaltspartnerschaft mbB

(56) Entgegenhaltungen:
- DE-A1- 102012 216 215
- MANUEL HUBER ET AL: "Temporal calibration in multisensor tracking setups", MIXED AND AUGMENTED REALITY, 2009. ISMAR 2009. 8TH IEEE INTERNATIONAL SYMPOSIUM ON, IEEE, PISCATAWAY, NJ, USA, 19 October 2009 (2009-10-19), pages 195 - 196, XP031568914, ISBN: 978-1-4244-5390-0

## Beschreibung

Die Erfindung betrifft eine Datenbereitstellungsvorrichtung zum Bereitstellen von Positionsdaten sowie von Zusatzdaten an eine übergeordnete Einheit. Eine Datenbereitstellungvorrichtung nach dem Oberbegriff der Ansprüche 1, 2 und 4 ist aus DE 10 2012 216 215 A1 bekannt. In Manuel Huber et al.: "Temporal calibration in multisensor tracking setups", 8th IEEE International Symposium on Mixed and Augmented Reality (ISMAR) 2009, wird zudem offenbart, dass verschiedene Sensoren, eine Kamera und ein Inertial-Sensor, über ein gemeinsames TriggerSignal synchronisiert angesteuert werden.

Es ist für verschiedene Anwendungen bekannt, mittels einer Positionserfassungsvorrichtung Positionsdaten über die jeweilige Position eines beweglichen Elements zu erfassen. Beispielsweise kann es sich dabei um die Position eines Motors handeln. Je nach Art des Motors kann es sich etwa um eine Linearposition oder um eine Drehposition des Motors handeln. Erfasste Positionsdaten können insbesondere bei der Ansteuerung des Motors Berücksichtigung finden. Wenn die Steuerung des Motors als Regelung ausgebildet ist, können die Positionsdaten eine Feedbackgröße der Regelung darstellen. Bei der genannten übergeordneten Einheit kann es sich beispielsweise um eine Motorsteuerung bzw. Motorregelung handeln. Positionsdaten sind dabei nicht auf Informationen über die aktuelle Position des jeweiligen Elements beschränkt, sondern können zusätzlich oder alternativ dazu Informationen über Positionsänderungen, insbesondere über die Geschwindigkeit, des jeweiligen Elements umfassen.

Neben Positionsdaten können, etwa für den Betrieb eines Motors, auch weitere Informationen wichtig sein. Daher kann es je nach Anwendung zweckmäßig sein, zusätzlich zu den Positionsdaten Zusatzdaten zu erfassen. Bei diesem Zusatzdaten kann es sich beispielsweise um Vibrationsdaten oder Temperaturdaten des jeweiligen Motors handeln, die parallel zur Erfassung der Positionsdaten des Motors erfasst werden. Solche Zusatzdaten können beispielsweise dazu dienen, Fehler in der Justierung, Hinweise auf Verschleiß oder sonstige potentielle Störungen eines regulären Betriebs des Motors möglichst frühzeitig festzustellen. Außerdem können die Zusatzdaten ebenso wie die Positionsdaten in eine Steuerung, insbesondere Regelung, des Motors einfließen.

Da das Erfassen von Positionsdaten einerseits und das Erfassen von Zusatzdaten, wie etwa Vibrationsdaten oder Temperaturdaten, andererseits in der Regel auf unterschiedlichen Messprinzipien beruhen, sind für das Erfassen von Positionsdaten und das Erfassen von Zusatzdaten in der Regel verschiedene Erfassungsvorrichtungen vorgesehen, deren Daten an die übergeordnete Einheit übermittelt werden. Damit die übergeordnete Einheit nicht für jede Erfassungsvorrichtung entsprechende Anschlussmöglichkeiten aufweisen muss, kann es dabei zweckmäßig sein, eine Datenbereitstellungsvorrichtung vorzusehen, in der die Positionsdaten und die Zusatzdaten zusammengetragen und von der diese Daten dann gemeinsam, insbesondere über eine einzelne Verbindung, an die jeweilige übergeordnete Einheit übertragen werden. Eine solche Datenbereitstellungsvorrichtung wird beispielsweise in EP 1 597 714 B1 beschrieben.

Typischerweise erfolgt dabei nicht nur das Erfassen der Positionsdaten und das Erfassen der Zusatzdaten in den verschiedenen Erfassungsvorrichtungen grundsätzlich unabhängig voneinander, sondern weisen auch die an die jeweilige übergeordnete Einheit übertragenen Positionsdaten und Zusatzdaten keine Abhängigkeit voneinander auf. Beispielsweise werden die Positionsdaten und die Zusatzdaten aufgrund der unterschiedlichen Messprinzipien mit unterschiedlicher Abtastfrequenz und/oder mit zeitlichem Versatz zueinander erfasst, der unter Umständen nicht präzise bekannt ist. Zwar kann vorgesehen sein, dass die Positionsdaten und die Zusatzdaten für die gemeinsame Übertragung an die übergeordnete Einheit miteinander kombiniert werden, wie es in der genannten EP 1 597 714 B1 der Fall ist. Die miteinander kombinierten Daten können aber zu ganz unterschiedlichen Zeitpunkten erfasst worden sein. Beispielsweise kann vorgesehen sein, dass die Positionsdaten mit einer vergleichsweise hohen Abtastfrequenz erfasst werden, während die Zusatzdaten mit einer geringeren Abtastfrequenz erfasst werden. Des Weiteren kann vorgesehen sein, dass manche erfasste Daten, insbesondere die Zusatzdaten, zwischengespeichert und zeitversetzt und/oder gesammelt übertragen werden, während andere erfasste Daten, insbesondere die Positionsdaten, fortlaufend unmittelbar nach dem Erfassen übertragen werden. Daher lässt sich aus der Übertragung miteinander kombinierter Positions- und Zusatzdaten allenfalls ableiten, dass die kombinierten Positions- und Zusatzdaten zu einem annähernd ähnlichen Zeitpunkt erfasst worden sind. Die so kombinierten Daten stehen jedoch aufgrund der voneinander unabhängigen Erfassung in den verschiedenen Erfassungsvorrichtungen in keinem präzise definiertem Bezug zueinander.

Je nach Art der Zusatzdaten können zusätzliche Schwierigkeiten auftreten. Beispielsweise können zwar bei Motoren mit konstanter Drehzahl Vibrationsdaten in festen Zeitabständen abgetastet und übertragen werden. Dagegen ist dies für Motoren, die bei unterschiedlichen Drehzahlen betrieben werden, beispielsweise für Servomotoren, in der Regel nicht zweckmäßig, da die Vibration stark mit der jeweiligen Drehzahl des Motors korreliert. Dadurch gestaltet sich die Analyse von Vibrationsdaten, die bei unterschiedlichen Motorgeschwindigkeiten erfasst werden, wesentlich schwieriger. Bisweilen wird versucht, die jeweilige Drehzahl aus dem Vibrationsspektrum abzuleiten. Alternativ dazu ist es bekannt, den Motor für das Erfassen der Vibrationsdaten kurzzeitig bei konstanten Drehzahlen zu betreiben. Die Positionserfassung hingegen ist von derartigen Schwierigkeiten nicht betroffen und kann daher währenddessen vollkommen unabhängig durchgeführt werden. Wiederum stehen die dann kombiniert an die übergeordnete Einheit übertragenen Daten in keinem präzise definiertem Bezug zueinander.

Damit die übergeordnete Einheit die empfangenen Positions- und Zusatzdaten gemeinsam, beispielsweise für eine Regelung, berücksichtigen kann, ist es daher üblich, dass die Positions- und Zusatzdaten in der übergeordneten Einheit nachträglich so verrechnet werden, dass sie dadurch in einen Bezug zueinander gebracht werden. Das kann beispielsweise durch einfache Interpolation oder Extrapolation oder eine Kombination daraus erfolgen. Es können jedoch auch komplexere Verfahren erforderlich sein, um eine gewünschte Zuverlässigkeit sicherzustellen. Das Verrechnen der Positions- und Zusatzdaten miteinander kann insbesondere infolge von Jitter und/oder aufgrund unterschiedlicher Zeitbasen beim jeweiligen Abtasten sowie beim Übertragen der Daten noch erschwert werden und dadurch insgesamt recht aufwendig sein.

Es ist eine Aufgabe der Erfindung, eine Datenbereitstellungsvorrichtung bereitzustellen, welche diese Nachteile vermeidet, insbesondere dazu beiträgt, dass die an die übergeordnete Einheit bereitgestellten Positions- und Zusatzdaten im Wesentlichen unmittelbar von der übergeordneten Einheit, beispielsweise für eine Steuerung oder Regelung, herangezogen werden können.

Die Aufgabe wird gelöst durch eine Datenbereitstellungsvorrichtung mit den Merkmalen des Anspruchs 1, durch eine Datenbereitstellungsvorrichtung mit den Merkmalen des Anspruchs 2, durch eine Datenbereitstellungsvorrichtung mit den Merkmalen des Anspruchs 4 sowie durch ein Verfahren zum Bereitstellen von Positionsdaten und Zusatzdaten an eine übergeordnete Einheit nach Anspruch 13. Vorteilhafte Weiterbildungen der Erfindung ergeben sich aus den abhängigen Ansprüchen, der vorliegenden Beschreibung sowie den Figuren.

Die erfindungsgemäße Datenbereitstellungsvorrichtung dient dem Bereitstellen von Positionsdaten sowie von Zusatzdaten an eine übergeordnete Einheit. Wie bereits erläutert, können die Positionsdaten und die Zusatzdaten dabei insbesondere Daten sein, die beide von demselben beweglichen Element, beispielsweise einem Motor, erfasst werden. Bei der Datenbereitstellungsvorrichtung kann es sich beispielsweise um ein Encoder- oder ein Motor-Feedback-System oder um einen Bestandteil eines solchen Systems handeln. Bei der übergeordneten Einheit kann es sich zum Beispiel um eine Steuerung, insbesondere um eine Regelung, für den Motor handeln, dessen Positions- und Zusatzdaten erfasst werden. Übergeordnet ist die Einheit insofern, als sie die Daten - gegebenenfalls nachdem sie sie angefordert hat - von der Datenbereitstellungsvorrichtung empfängt und daraufhin nutzt, während die Datenbereitstellungsvorrichtung lediglich ein Zwischenglied zwischen der Erfassung und der Nutzung der Daten darstellt.

Die Datenbereitstellungsvorrichtung umfasst eine Signalaufbereitungseinheit die dazu ausgebildet ist, Positionsdaten zu empfangen und Zusatzdaten zu empfangen, die Positionsdaten und die Zusatzdaten für eine gemeinsame Datenübertragung miteinander zu kombinieren und sie anschließend kombiniert auszugeben, so dass sie über einen einzelne Verbindung zur übergeordneten Einheit übertragen werden können. Die gemeinsame Datenübertragung kann beispielsweise mittels eines geeigneten seriellen Protokolls erfolgen. Die Datenübertragung kann auch umfassen, dass die Daten als Datenpakete übertragen werden, die jeweils sowohl Positionsdaten als auch Zusatzdaten umfassen. Die miteinander kombinierten Positions- und Zusatzdaten werden von der Signalaufbereitungseinheit vorzugsweise direkt an die übergeordnete Einheit ausgegeben.

Wenn hier und im Folgenden die Rede davon ist, dass die Datenbereitstellungsvorrichtung, die Signalaufbereitungseinheit oder ein sonstiges Element der Datenbereitstellungsvorrichtung zu etwas ausgebildet ist, meint dies nicht lediglich eine generelle, bloß theoretische Möglichkeit, sondern eine konkrete technische Ausgestaltung derart, dass dasjenige, wozu die Datenbereitstellungsvorrichtung bzw. das jeweilige Element jeweils ausgebildet ist, im regulären Betrieb der Datenbereitstellungsvorrichtung auch tatsächlich von dem jeweiligen Element umgesetzt wird.

Erfindungsgemäß umfasst die Datenbereitstellungsvorrichtung ferner eine Signalverarbeitungseinheit, die dazu ausgebildet ist, von einer Positionserfassungsvorrichtung Positionsdaten zu empfangen und von einer Zusatzdatenerfassungsvorrichtung Zusatzdaten zu empfangen, die Zusatzdaten in einen definierten, bevorzugt zeitlichen, Bezug zu den Positionsdaten zu bringen und zumindest die Zusatzdaten anschließend an die Signalaufbereitungseinheit auszugeben. Vorzugsweise gibt die Signalverarbeitungseinheit auch die Positionsdaten an die Signalaufbereitungseinheit aus. Grundsätzlich kann die Signalverarbeitungseinheit die Positionsdaten aber auch direkt von der Positionserfassungsvorrichtung empfangen.

Aufgrund der erfindungsgemäßen Ausbildung ist die Signalverarbeitungseinheit also zwischen den Erfassungsvorrichtungen (Positionserfassungsvorrichtung und Zusatzdatenerfassungsvorrichtung), von denen sie erfasste Positions- und Zusatzdaten empfängt, und der Signalaufbereitungseinheit vorgesehen, an die sie zumindest die Zusatzdaten und vorzugsweise auch die Positionsdaten ausgibt. Wesentlich ist dabei, dass die Positions- und Zusatzdaten bereits an dieser Stelle, also noch bevor sie von der Signalaufbereitungseinheit für die gemeinsame Datenübertragung an die übergeordnete Einheit miteinander kombiniert werden, in einen definierten Bezug zueinander gebracht worden sind.

Dieser definierte Bezug kann insbesondere ein zeitlicher Bezug sein, d. h., dass dann für einen Satz aus Positionsdaten und Zusatzdaten eindeutig und zuverlässig definiert ist, in welchem zeitlichen Zusammenhang zueinander sie stehen. Das kann beispielsweise umfassen, dass die kombiniert ausgegebenen Positions- und Zusatzdaten derart sind, dass sie sich auf einen im Rahmen der Erfassungsgenauigkeit identischen Zeitpunkt beziehen, oder auch, dass sich der Zeitpunkt, auf den sich die Positionsdaten beziehen, und der Zeitpunkt, auf den sich die Zusatzdaten beziehen, um eine definierte, vorzugsweise stets gleiche, Zeitdifferenz unterscheiden.

Bei dem definierten Bezug kann es sich aber auch um einen positionsbasierten Bezug handeln. Ein solcher kann insbesondere dadurch vorliegen, dass die Zusatzdaten nicht auf einen bestimmten Zeitpunkt der Datenerfassung bezogen ausgegeben werden, sondern auf eine bestimmte Position bezogen ausgegeben werden, die das bewegliche Element (z.B. ein Motor) zum Zeitpunkt der Datenerfassung aufgewiesen hat. Dass die Signalverarbeitungseinheit die Zusatzdaten in den definierten Bezug zu den Positionsdaten bringt, kann dabei auch darin bestehen, dazu beizutragen, dass die Zusatzdaten bereits in einem präzise definierten, bevorzugt zeitlichen, Bezug zu den Positionsdaten erhoben werden, wie weiter unten noch erläutert wird.

Unabhängig von der Art des definierten Bezugs, in den die Zusatzdaten relativ zu den Positionsdaten gebracht werden, kann diese Vorverarbeitung der Zusatzdaten durch die Signalverarbeitungseinheit als eine Art Normierung der Zusatzdaten auf die Positionsdaten betrachtet werden, durch die gewährleistet wird, dass die übergeordnete Einheit Positionsdaten und Zusatzdaten empfängt, die ohne weitere Verarbeitung direkt, beispielweise für die Ansteuerung des Motors, herangezogen werden können.

Je nach Variante der Erfindung ist die Positionserfassungsvorrichtung in die Datenbereitstellungsvorrichtung integriert. Ferner kann auch die Zusatzdatenerfassungsvorrichtung in die Datenbereitstellungsvorrichtung integriert, also als Bestandteil der Datenbereitstellungsvorrichtung ausgebildet sein. Alternativ dazu kann die Zusatzdatenerfassungsvorrichtung auch als von der Datenbereitstellungsvorrichtung separate und eigenständige Einheit ausgebildet sein.

Gemäß einer ersten Variante der Erfindung ist die Signalverarbeitungseinheit dazu ausgebildet, in Abhängigkeit von den empfangenen Positionsdaten ein positionsbasiertes Triggersignal zu erzeugen und an die Zusatzdatenerfassungsvorrichtung auszugeben. Bei dieser ersten Variante der Erfindung werden die Zusatzdaten also dadurch in einen definierten Bezug zu den empfangenen Positionsdaten gebracht, dass die Signalverarbeitungseinheit das positionsbasierte Triggersignal erzeugt und ausgibt. Positionsbasiert kann das Triggersignal insbesondere dadurch sein, dass es immer gerade dann erzeugt und ausgegeben wird, wenn das Element, dessen Position erfasst wird, eine bestimmte Position erreicht, was anhand der erfassten Positionsdaten festgestellt wird. Das ausgegebene positionsbasierte Triggersignal kann dann in der Zusatzdatenerfassungsvorrichtung das Erfassen von Zusatzdaten (also das Abtasten eines oder mehrerer Zusatzdatenwerte) auslösen, welche die Signalverarbeitungseinheit anschließend empfängt.

Da das Erfassen der Zusatzdaten bei dieser ersten Variante der Erfindung von dem Erreichen der bestimmten Position abhängt, werden die Zusatzdaten in diesem Fall mittels des positionsbasierten Triggersignals von der Signalverarbeitungseinheit in einen definierten Bezug zu den Positionsdaten gebracht. Zumindest mittelbar handelt es sich dabei auch um einen zeitlichen Bezug, da anhand der Positionsdaten bekannt oder zumindest ableitbar ist, zu welchem Zeitpunkt die bestimmte Position, bei deren Erreichen das positionsbasierte Triggersignal erzeugt und ausgegeben wurde, vorgelegen hat. Die infolge eines positionsbasierten Triggersignals erfassten Zusatzdaten brauchen idealerweise nicht weiter mit den Positionsdaten verrechnet zu werden. Ein Verrechnen kann gleichwohl zweckmäßig sein, beispielsweise um den mittelbaren zeitlichen Bezug in einen unmittelbaren zeitlichen Bezug der Zusatzdaten zu den Positionsdaten umzurechnen.

Gemäß einer zweiten Variante der Erfindung ist die Signalverarbeitungseinheit dazu ausgebildet, von der Positionserfassungsvorrichtung ein positionsbasiertes Triggersignal zu empfangen und an die Zusatzdatenerfassungsvorrichtung auszugeben. Die Signalverarbeitungseinheit kann das empfangene positionsbasierte Triggersignal dabei insbesondere unmittelbar an die Zusatzdatenerfassungsvorrichtung weiterleiten. Anders als bei der ersten Variante der Erfindung wird bei dieser zweiten Variante der Erfindung das positionsbasierte Triggersignal nicht von der Signalverarbeitungseinheit selbst erzeugt. Stattdessen werden die Zusatzdaten dadurch von der Signalverarbeitungseinheit in einen definierten Bezug zu den empfangenen Positionsdaten gebracht, dass sie das positionsbasierte Triggersignal von der Positionserfassungsvorrichtung empfängt und es anschließend an die Zusatzdatenerfassungsvorrichtung ausgibt, um dort ein Erfassen von Zusatzdaten auszulösen. Wie bei der ersten Variante der Erfindung empfängt die Signalverarbeitungseinheit von der Zusatzdatenerfassungsvorrichtung dann die so erfassten Zusatzdaten, die idealerweise nicht weiter mit den Positionsdaten verrechnet zu werden brauchen, da sie infolge des positionsbasierten Triggersignals bereits einen definierten Bezug zu den Positionsdaten aufweisen. Ein weiteres Verrechnen der Zusatzdaten ist aber auch nicht ausgeschlossen.

Bei der zweiten Variante der Erfindung kann es zweckmäßig sein, wenn die Datenbereitstellungsvorrichtung auch die Positionserfassungsvorrichtung umfasst und die Positionserfassungsvorrichtung dazu ausgebildet ist, das positionsbasierte Triggersignal zu erzeugen und an die Signalverarbeitungseinheit auszugeben. Insbesondere kann vorgesehen sein, dass die Positionserfassungsvorrichtung das positionsbasierte Triggersignal immer dann erzeugt und an die Signalverarbeitungseinheit ausgibt, wenn das Element, dessen Position erfasst wird, eine bestimmte Position erreicht. Dies kann insbesondere anhand der von der Positionserfassungsvorrichtung erfassten Positionsdaten festgestellt werden. Das Erfassen der Positionsdaten kann seinerseits durch ein zusätzliches Triggersignal ausgelöst werden, das beispielsweise zyklisch oder infolge einer Anforderung der übergeordneten Einheit zum Beispiel von der Signalverarbeitungseinheit erzeugt und an die Positionserfassungsvorrichtung ausgegeben wird.

Gemäß einer dritten Variante der Erfindung umfasst die Datenbereitstellungsvorrichtung die Positionserfassungsvorrichtung und ist die Positionserfassungsvorrichtung dazu ausgebildet, ein positionsbasiertes Triggersignal zu erzeugen und, vorzugsweise unmittelbar, an die Zusatzdatenerfassungsvorrichtung auszugeben. Von der zweiten Variante der Erfindung unterscheidet sich diese dritte Variante der Erfindung dadurch, dass das von der Positionserfassungsvorrichtung erzeugte positionsbasierte Triggersignal nicht über die Signalverarbeitungseinheit zur Zusatzdatenerfassungsvorrichtung gelangt, sondern vorzugweise auf direktem Wege. Der Beitrag der Signalverarbeitungseinheit dazu, die infolge des Triggersignals erfassten Zusatzdaten in einen definierten Bezug zu den Positionsdaten zu bringen, kann dabei darin bestehen, die von der Positionserfassungsvorrichtung empfangenen Positionsdaten und die von der Zusatzdatenerfassungsvorrichtung empfangenen Zusatzdaten über die bestimmte Position, bei deren Erreichen das positionsbasierte Triggersignal erzeugt und ausgegeben wurde, zu korrelieren.

Gemäß einer vorteilhaften Ausführungsform ist die Signalverarbeitungseinheit dazu ausgebildet, die Positionsdaten in einen definierten, bevorzugt zeitlichen, Bezug zu den Zusatzdaten zu bringen und anschließend an die Signalaufbereitungseinheit auszugeben. Mit anderen Worten kann bei dieser Ausführungsform vorgesehen sein, dass zum Herbeiführen des definierten Bezugs zwischen den Positionsdaten und den Zusatzdaten nicht nur die Zusatzdaten an die Positionsdaten angepasst, sondern auch umgekehrt die Positionsdaten an die Zusatzdaten angepasst werden. Grundsätzlich kommt auch in Betracht, dass ausschließlich die Positionsdaten in einen definierten Bezug zu den Zusatzdaten gebracht werden, während die Signalverarbeitungseinheit die von der Zusatzdatenerfassungsvorrichtung empfangenen Zusatzdaten zumindest im Wesentlichen unverändert an die Signalaufbereitungseinheit ausgibt. Vorzugsweise ist es jedoch gerade umgekehrt, da es sich bei den Positionsdaten typischerweise um die zeitkritischeren und etwa für die Steuerung bzw. Regelung eines Motors wichtigeren Daten handelt.

Gemäß einer weiteren vorteilhaften Ausführungsform ist die Signalverarbeitungseinheit dazu ausgebildet, die Zusatzdaten dadurch in einen definierten Bezug zu den empfangenen Positionsdaten zu bringen, dass sie die empfangenen Positions- und Zusatzdaten miteinander verrechnet, vorzugsweise indem sie auf Basis der Positionsdaten normierte Zusatzdaten errechnet. An die Signalaufbereitungseinheit werden dann also die so verrechneten bzw. normierten Zusatzdaten ausgegeben, während die erfassten Positionsdaten vorzugsweise unverändert an die Signalaufbereitungseinheit ausgegeben werden. Bei einer solchen Ausführungsform erfolgt das In-Bezug-Setzen der Zusatzdaten zu den Positionsdaten also rechnerisch innerhalb der Signalverarbeitungseinheit. Das Verrechnen kann zum Beispiel eine Interpolation umfassen, durch die für einen Zeitpunkt, auf den sich jeweilige Positionsdaten beziehen, für den aber keine auf diesen Zeitpunkt bezogenen Zusatzdaten unmittelbar vorliegen, normierte Zusatzdaten aus Zusatzdaten errechnet werden, die sich auf einen oder mehrere frühere und/oder spätere Zeitpunkte beziehen.

Das Errechnen auf Basis der Positionsdaten normierter Zusatzdaten kann beispielsweise dadurch erfolgen, dass für einen Zeitpunkt, an dem Positionsdaten, aber keine Zusatzdaten erfasst worden sind, Zusatzdaten rechnerisch ermittelt werden, indem sie aus zuvor erfassten Zusatzdaten (d.h. Zusatzdaten, die vor diesem Zeitpunkt erfasst wurden) - vorzugsweise zumindest aus den vor diesem Zeitpunkt zuletzt erfassten Zusatzdaten - sowie gegebenenfalls aus einem bekannten Bezug dieser Zusatzdaten zu zuvor erfassten Positionsdaten - vorzugsweise zu zumindest den vor diesem Zeitpunkt zuletzt erfassten Positionsdaten - extrapoliert werden. Dazu kann beispielsweise vorgesehen sein, dass sowohl Positions- als auch Zusatzdaten einschließlich ihres zeitlichen Versatzes zueinander zwischengespeichert werden; anhand dieser zwischengespeicherten Daten können dann durch Interpolation zwischen den erfassten Positionsdaten für die Zeitpunkte, an denen Zusatzdaten erfasst worden sind, jeweilige interpolierte Positionsdaten ermittelt werden. Auf Basis dieses Datensatzes (zuvor erfasste Positions- und Zusatzdaten sowie interpolierte Positionsdaten) können dann für zu einem bestimmten Zeitpunkt neu erfasste Positionsdaten durch Extrapolation entsprechende Zusatzdaten ermittelt werden. Alternativ oder ergänzend zu einer solchen Extrapolation kann auch eine Interpolation (oder auch eine Korrektur der Extrapolation) erfolgen, sobald die nächsten Zusatzdaten erfasst werden. Des Weiteren ist denkbar, dass die neu erfassten Zusatzdaten mit den interpolierten Positionsdaten kombiniert und dann gemeinsamen mit ihnen übertragen werden.

Eine solche rechnerische Verarbeitung der Zusatzdaten auf Basis der Positionsdaten stellt eine weitere Möglichkeit dar, die Zusatzdaten in einen definierten Bezug zu den Positionsdaten zu bringen, zusätzlich zu der Möglichkeit, bereits für die Erfassung der Zusatzdaten eine Abhängigkeit von den Positionsdaten herbeizuführen, wie es bei den genannten Varianten der Erfindung jeweils der Fall ist und auch durch die nachfolgenden Ausführungsformen veranschaulicht wird.

Gemäß einer vorteilhaften Ausführungsform ist die Signalverarbeitungseinheit dazu ausgebildet, ein gemeinsames, vorzugsweise zeitbasiertes, Triggersignal für das Erfassen von Positionsdaten und das Erfassen von Zusatzdaten zu erzeugen und synchronisiert an die Positionserfassungsvorrichtung und an die Zusatzdatenerfassungsvorrichtung auszugeben. Durch das Triggersignal kann beispielsweise das Abtasten eines einzelnen Positionsdatenwerts bzw. Zusatzdatenwerts oder einer Abfolge von Positionsdatenwerten bzw. Zusatzdatenwerten ausgelöst werden. Bei dieser Ausführungsform können die Zusatzdaten also (unter anderem) dadurch in einen definierten Bezug zu den empfangenen Positionsdaten gebracht werden, dass die Signalverarbeitungseinheit das gemeinsame Triggersignal erzeugt und synchronisiert an die Positionserfassungsvorrichtung und an die Zusatzdatenerfassungsvorrichtung ausgibt. Synchronisiert kann das Ausgeben insbesondere insofern sein, als das gemeinsame Triggersignal zeitgleich oder mit definiertem zeitlichem Versatz an die Positionserfassungsvorrichtung und an die Zusatzdatenerfassungsvorrichtung ausgegeben wird.

Das synchronisierte Ausgeben des gemeinsamen Triggersignals dient dazu, in der Positionserfassungsvorrichtung ein Erfassen von Positionsdaten auszulösen und in definiertem zeitlichem Bezug dazu in der Zusatzdatenerfassungsvorrichtung ein Erfassen von Zusatzdaten auszulösen, wobei die Signalverarbeitungseinheit anschließend sowohl die erfassten Positionsdaten als auch die erfassten Zusatzdaten empfängt. Die empfangenen Zusatzdaten brauchen von der Signalverarbeitungseinheit dann idealerweise nicht weiter mit den Positionsdaten verrechnet zu werden, da sie bereits durch das gemeinsame Triggersignal von der Signalverarbeitungseinheit in zeitlichen Bezug zu den Positionsdaten gebracht worden sind. Es ist jedoch auch nicht ausgeschlossen, dass sie noch zusätzlich mit den Positionsdaten verrechnet werden. Ein solches Verrechnen kann beispielsweise zur Kompensation unterschiedlicher Signallaufzeiten, unterschiedlicher Dauern der jeweiligen Abtastung und/oder eines bekannten zeitlichen Versatzes zweckmäßig sein.

Die Signalverarbeitungseinheit kann insbesondere dazu ausgebildet sein, das gemeinsame Triggersignal zyklisch, d. h. in regelmäßigen zeitlichen Intervallen, zu erzeugen. Grundsätzlich kann alternativ oder zusätzlich zu einer zyklischen Erzeugung des gemeinsamen Triggersignals auch vorgesehen sein, dass die Signalverarbeitungseinheit das gemeinsame Triggersignal in Reaktion auf eine externe Anforderung, beispielsweise von der übergeordneten Einheit, erzeugt. Wenn das gemeinsame Triggersignal infolge einer externen Anforderung erzeugt wird, kann es anstatt von der Signalverarbeitungseinheit auch von der Signalaufbereitungseinheit oder von einer Kommunikationsschnittstelle, über die die Datenbereitstellungsvorrichtung mit der übergeordneten Einheit verbunden sein kann, erzeugt werden. Ferner kann die Erzeugung eines Triggersignals grundsätzlich auch von erfassten Daten, zum Beispiel von anderen Zusatzdaten und/oder von den Positionsdaten abhängig sein.

Gemäß einer weiteren vorteilhaften Ausführungsform ist die Datenbereitstellungsvorrichtung dazu ausgebildet, wahlweise in einer ersten Betriebsart, in der (vorzugsweise von der Signalverarbeitungseinheit) zeitbasierte Triggersignale erzeugt und synchronisiert an die Positionserfassungsvorrichtung sowie die Zusatzdatenerfassungsvorrichtung ausgegeben werden, oder in einer zweiten Betriebsart betrieben zu werden, in der (vorzugsweise von der Signalverarbeitungseinheit oder von der Positionserfassungsvorrichtung) in Abhängigkeit von den Positionsdaten positionsbasierte Triggersignale erzeugt und an die Zusatzdatenerfassungsvorrichtung ausgegeben werden. Die Triggersignale dienen dabei jeweils dazu, in der Positionserfassungsvorrichtung bzw. der Zusatzdatenerfassungsvorrichtung das Erfassen von Positionsdaten bzw. von Zusatzdaten auszulösen. Die so erfassten Positions- und Zusatzdaten können anschließend von der Signalverarbeitungseinheit empfangen werden. Dabei weisen die Zusatzdaten aufgrund des jeweiligen Triggersignals bereits einen definierten Bezug zu den Positionsdaten auf. In der Signalverarbeitungseinheit können die Zusatzdaten aber auch noch weiter auf Basis der Positionsdaten verrechnet werden.

Gemäß einer vorteilhaften Weiterbildung der vorstehenden Ausführungsform ist die Datenbereitstellungsvorrichtung dazu ausgebildet, dass in Abhängigkeit von erfassten Positionsdaten automatisch zwischen der ersten und der zweiten Betriebsart umgeschaltet wird. Insbesondere kann in Abhängigkeit von einer aus den Positionsdaten abgeleiteten Geschwindigkeit automatisch zwischen der ersten und der zweiten Betriebsart umgeschaltet werden. Beispielsweise kann es zweckmäßig sein, die Datenbereitstellungsvorrichtung bei Geschwindigkeiten unterhalb eines bestimmten Schwellenwerts in der ersten Betriebsart mit den zeitbasierten Triggersignalen zu betreiben und bei Geschwindigkeiten oberhalb des Schwellenwerts in der zweiten Betriebsart mit den positionsbasierten Triggersignalen zu betreiben.

Gemäß einer weiteren vorteilhaften Ausführungsform umfasst die Datenbereitstellungsvorrichtung die Zusatzdatenerfassungsvorrichtung, wobei die Zusatzdatenerfassungsvorrichtung dazu ausgebildet ist, als Zusatzdaten Vibrationsdaten, Ultraschalldaten und/oder Temperaturdaten zu erfassen und an die Signalverarbeitungseinheit auszugeben. Derartige Daten können speziell zweckmäßig für die Überwachung eines Motors im Hinblick auf einen störungsfreien Betrieb sein.

Gemäß einer alternativen vorteilhaften Ausführungsform umfasst die Datenbereitstellungsvorrichtung die Zusatzdatenerfassungsvorrichtung, wobei die Zusatzdatenerfassungsvorrichtung dazu ausgebildet ist, als Zusatzdaten Speicherwerte aus einem Speicher der Zusatzdatenerfassungsvorrichtung auszulesen und an die Signalverarbeitungseinheit auszugeben. In diesem Fall entspricht das Erfassen von Zusatzdaten also einer Art Nachschlagen von gespeicherter Information.

Grundsätzlich kann die Datenbereitstellungsvorrichtung auch mit mehr als nur einer Zusatzdatenerfassungsvorrichtung zusammenwirken bzw. mehr als nur eine Zusatzdatenerfassungsvorrichtung umfassen, wobei die Zusatzdatenerfassungsvorrichtungen nicht unbedingt gleichartig ausgebildet sein müssen. Beispielsweise kann eine der Zusatzdatenerfassungsvorrichtungen dazu ausgebildet sein, als Zusatzdaten Vibrationsdaten, Ultraschalldaten und/oder Temperaturdaten zu erfassen und an die Signalverarbeitungseinheit auszugeben, und eine andere dazu ausgebildet sein, als Zusatzdaten Speicherwerte aus einem Speicher der Zusatzdatenerfassungsvorrichtung auszulesen und an die Signalverarbeitungseinheit auszugeben.

Gemäß einer weiteren vorteilhaften Ausführungsform umfasst die Datenbereitstellungsvorrichtung ferner eine Kommunikationsschnittstelle, die mit einer Kommunikationsschnittstelle der übergeordneten Einheit verbindbar ist und dazu ausgebildet ist, die kombinierten Positions- und Zusatzdaten von der Signalaufbereitungseinheit zu empfangen und an die übergeordnete Einheit zu übertragen.

Das erfindungsgemäße Verfahren zum Bereitstellen von Positionsdaten sowie von Zusatzdaten an eine übergeordnete Einheit umfasst die folgenden Schritte: Erfassen von Positionsdaten mittels einer Positionserfassungsvorrichtung; Erzeugen eines positionsbasierten Triggersignals in Abhängigkeit von den Positionsdaten mittels der Positionserfassungsvorrichtung oder mittels einer Signalverarbeitungseinheit; Ausgeben des positionsbasierten Triggersignals an eine Zusatzdatenerfassungsvorrichtung; in Reaktion auf das positionsbasierte Triggersignal Erfassen von Zusatzdaten mittels der Zusatzdatenerfassungsvorrichtung; Kombinieren der Positionsdaten und der Zusatzdaten für eine gemeinsame Datenübertragung mittels einer Signalaufbereitungseinheit; und Ausgeben der kombinierten Positions- und Zusatzdaten an die übergeordnete Einheit. Dieses Verfahren entspricht im Wesentlichen, insbesondere hinsichtlich seiner Vorteile, den beschriebenen drei Varianten einer erfindungsgemäßen Datenbereitstellungsvorrichtung, bei denen die Zusatzdaten dadurch in einen definierten Bezug zu den empfangenen Positionsdaten gebracht werden, dass sie ausgelöst durch ein positionsbasiertes Triggersignal erfasst werden. Die für diese Varianten beschriebenen möglichen Ausgestaltungen gelten entsprechend auch für das vorliegende Verfahren.

Die Erfindung wird nachfolgend lediglich beispielhaft unter Bezugnahme auf die Figuren weiter erläutert.
- Fig. 1: zeigt eine nicht beanspruchte Datenbereitstellungsvorrichtung.
- Fig. 2: zeigt eine weitere nicht beanspruchte Datenbereitstellungsvorrichtung.
- Fig. 3: zeigt eine Ausführungsform einer erfindungsgemäßen Datenbereitstellungsvorrichtung.
- Fig. 4: zeigt eine weitere Ausführungsform einer erfindungsgemäßen Datenbereitstellungsvorrichtung.

In den Figuren ist jeweils eine Datenbereitstellungsvorrichtung 11 in schematischer Darstellung gezeigt. Die Datenbereitstellungsvorrichtung 11 umfasst jeweils eine Signalaufbereitungseinheit 13 sowie eine Signalverarbeitungseinheit 15. Außerdem sind jeweils eine Positionserfassungsvorrichtung 17 sowie eine Zusatzdatenerfassungsvorrichtung 19 als Bestandteile der Datenbereitstellungsvorrichtung 11 gezeigt. Grundsätzlich könnten sowohl die Positionserfassungsvorrichtung 17 als auch die Zusatzdatenerfassungsvorrichtung 19 jeweils auch als von der Datenbereitstellungsvorrichtung 11 separate Vorrichtungen ausgebildet sein.

Die Datenbereitstellungsvorrichtung 11 dient jeweils dem Bereitstellen von mittels der Positionserfassungsvorrichtung 17 erfassten Positionsdaten P und von mittels der Zusatzdatenerfassungsvorrichtung 19 erfassten Zusatzdaten Z an eine übergeordnete Einheit 21. Bei der übergeordneten Einheit 21 kann es sich beispielsweise um eine Steuerung bzw. Regelung für einen Motor (nicht dargestellt) handeln. Die Positionserfassungsvorrichtung 17 und die Zusatzdatenerfassungsvorrichtung 19 sind insbesondere dazu ausgebildet, Positions- bzw. Zusatzdaten P bzw. Z dieses Motors zu erfassen. Für das Übertragen der Positions- und Zusatzdaten P, Z an die übergeordnete Einheit 21 umfasst die Datenbereitstellungsvorrichtung 11 ferner jeweils eine Kommunikationsschnittstelle 23, die mit einer Kommunikationsschnittstelle 25 der übergeordneten Einheit 21 verbindbar bzw. (wie in den Figuren dargestellt) verbunden ist.

Den gezeigten Datenbereitstellungsvorrichtungen 11 gemeinsam ist ferner, dass die erfassten Positionsdaten P von der Positionserfassungsvorrichtung 17 und die erfassten Zusatzdaten Z von der Zusatzdatenerfassungsvorrichtung 19 jeweils über die Signalverarbeitungseinheit 15 zur Signalaufbereitungseinheit 13 gelangen und dort für eine gemeinsame Datenübertragung miteinander kombiniert werden. In kombinierter Form werden die Positions- und Zusatzdaten P, Z schließlich ausgegeben, nämlich von der Kommunikationsschnittstelle 23 der Datenbereitstellungsvorrichtung 11 an die Kommunikationsschnittstelle 25 der übergeordneten Einheit 21 übertragen. Die übergeordnete Einheit 21 kann die Positions- und Zusatzdaten P, Z dann beispielsweise im Rahmen einer Motorsteuerung heranziehen.

Damit die übergeordnete Einheit 21 die Positions- und Zusatzdaten P, Z vor einer Verwendung nicht zunächst miteinander verrechnen muss, um sie in einen definierten Bezug zueinander zu bringen, weisen bei den gezeigten Datenbereitstellungsvorrichtungen 11 die an die übergeordnete Einheit 21 übertragenen Zusatzdaten Z bereits einen definierten Bezug zu den Positionsdaten P auf. Das wird bei den in den verschiedenen Figuren gezeigten Datenbereitstellungsvorrichtungen 11 auf unterschiedliche Weise erreicht, wobei in allen Fällen die Zusatzdaten Z vorteilhafterweise im Wesentlichen so früh wie möglich, also nahe bei der Erfassung der Zusatzdaten Z, in einen definierten Bezug zu den Positionsdaten P gebracht werden.

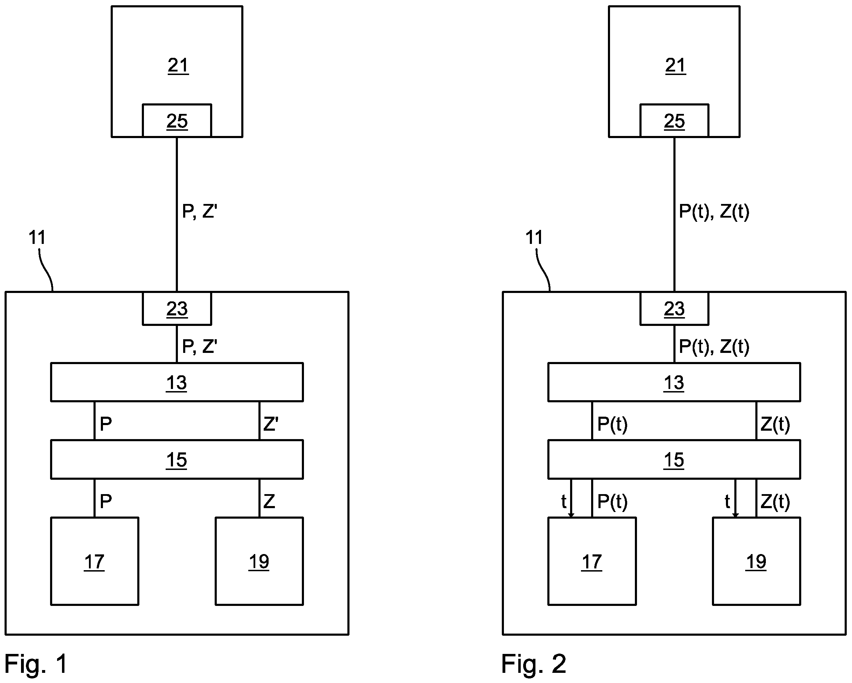

Bei der in Fig. 1 gezeigten nicht erfindungsgemäßen Datenbereitstellungsvorrichtung 11 erfolgt dies dadurch, dass die Signalverarbeitungseinheit 15 die Positionsdaten P und die Zusatzdaten Z, die sie von der Positionserfassungsvorrichtung 17 bzw. der Zusatzdatenerfassungsvorrichtung 19 empfängt, miteinander verrechnet. Das kann insbesondere umfassen, dass die empfangenen Zusatzdaten Z so modifiziert werden, dass sie sich eindeutig jeweiligen Positionsdaten P, die zum Beispiel im Wesentlichen gleichzeitig oder in einem definierten zeitlichen Abstand zu den Zusatzdaten Z erfasst wurden, zuordnen lassen. Insofern stellen die Positionsdaten P die Basis für eine Art Normierung der Zusatzdaten Z dar. Im Ergebnis gibt die Signalverarbeitungseinheit 15 dann anstelle der von der Zusatzdatenerfassungsvorrichtung 19 empfangenen Zusatzdaten Z modifizierte (nämlich in einen definierten Bezug zu den Positionsdaten P gebrachte) Zusatzdaten Z' an die Signalaufbereitungseinheit 13 aus, wo sie dann für die gemeinsame Datenübertragung mit den (unveränderten) Positionsdaten P kombiniert werden. Grundsätzlich könnte auch umgekehrt vorgesehen sein, dass durch das genannte Verrechnen nicht die Zusatzdaten Z, sondern die Positionsdaten P modifiziert werden, um den definierten Bezug zwischen den Daten herbeizuführen. Außerdem kommt auch in Betracht, sowohl die Positionsdaten P als auch die Zusatzdaten Z durch das Verrechnen zu modifizieren.

Bei der in Fig. 2 gezeigten nicht erfindungsgemäßen Datenbereitstellungsvorrichtung 11 ergibt sich der definierte Bezug zwischen den Positionsdaten P und den Zusatzdaten Z im Wesentlichen daraus, dass die Signalverarbeitungseinheit 15 ein gemeinsames zeitbasiertes Triggersignal t erzeugt, welches in der Positionserfassungsvorrichtung 17 das Erfassen von Positionsdaten P auslöst und in der Zusatzdatenerfassungsvorrichtung 19 das Erfassen von Zusatzdaten Z auslöst. Dazu gibt die Signalverarbeitungseinheit 15 das gemeinsame zeitbasierte Triggersignal t synchronisiert, nämlich im Wesentlichen zeitgleich oder mit definiertem zeitlichem Versatz, an die beiden Erfassungsvorrichtungen 17, 19 aus. Die Positionsdaten P(t) und die Zusatzdaten Z(t), die die Signalverarbeitungseinheit 15 von der Positionserfassungsvorrichtung 17 bzw. der Zusatzdatenerfassungsvorrichtung 19 empfängt, weisen dann aufgrund des synchronisierten Auslösens der jeweiligen Erfassung mittels des gemeinsamen Triggersignals t bereits einen definierten zeitlichen Bezug zueinander auf. Die Signalverarbeitungseinheit 15 kann insbesondere die Zusatzdaten Z(t) gleichwohl gegebenenfalls noch modifizieren, etwa um den vorhandenen definierten Bezug in den Daten ausdrücklich zu hinterlegen, damit die übergeordnete Einheit 21 den definierten Bezug anhand der Daten unmittelbar feststellen kann. Ein solches zusätzliches Modifizieren ist jedoch nicht unbedingt erforderlich. Die in Abhängigkeit von dem gemeinsamen Triggersignal t erfassten Positionsdaten P(t) und Zusatzdaten Z(t) werden von der Signalverarbeitungseinheit 15 an die Signalaufbereitungseinheit 13 ausgegeben, welche sie kombiniert, damit sie schließlich gemeinsam über die Kommunikationsschnittstellen 23 und 25 an die übergeordnete Einheit 21 übertragen werden können.

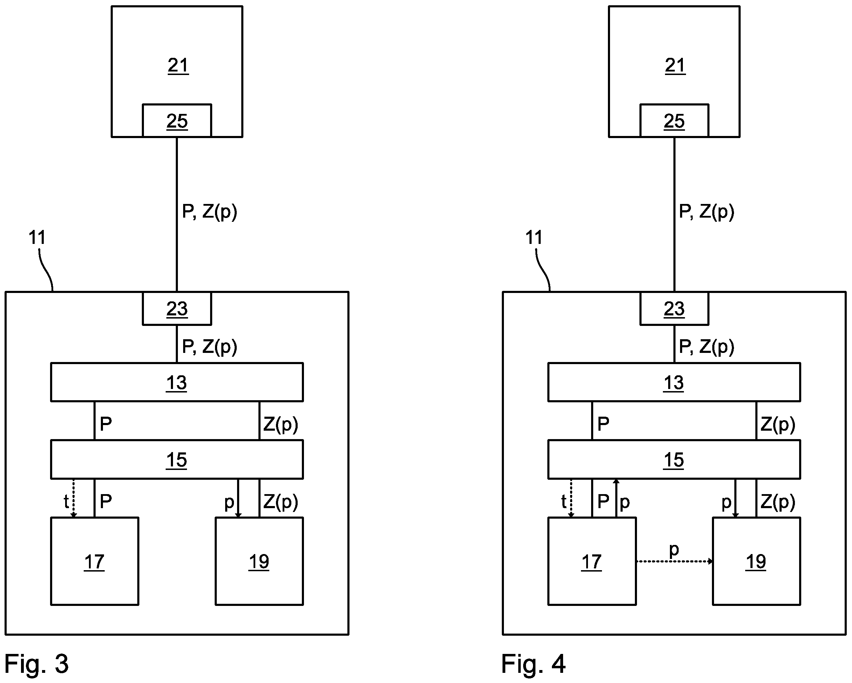

Bei den in den Figuren 3 und 4 gezeigten Ausführungsformen einer erfindungsgemäßen Datenbereitstellungsvorrichtung 11 wird das Erfassen der Zusatzdaten Z in der Zusatzdatenerfassungsvorrichtung 19 nicht durch ein gemeinsames, zeitbasiertes Triggersignal t, sondern durch ein positionsbasiertes Triggersignal p ausgelöst. Dieses positionsbasierte Triggersignal p kann, wie es bei der in Fig. 3 gezeigten Ausführungsform gemäß der ersten Variante der Erfindung der Fall ist, von der Signalverarbeitungseinheit 15 in Abhängigkeit von Positionsdaten P, die sie von der Positionserfassungsvorrichtung 17 empfängt, erzeugt und dann an die Zusatzdatenerfassungsvorrichtung 19 ausgegeben werden. Beispielsweise erzeugt die Signalverarbeitungseinheit 15 immer dann ein positionsbasiertes Triggersignal p zum Auslösen eines Erfassens von Zusatzdaten Z(p), wenn sie anhand der empfangenen Positionsdaten P feststellt, dass das Element, zum Beispiel der Motor, dessen Position erfasst wird, eine bestimmte Position erreicht hat. Die Zusatzdaten Z(p), welche die Signalverarbeitungseinheit 15 dann von der Zusatzdatenerfassungsvorrichtung 19 empfängt, lassen sich somit dieser bestimmten Position zuordnen und weisen dadurch einen präzise definierten Bezug zu den entsprechenden Positionsdaten P auf. Die Positionsdaten P und die Zusatzdaten Z(p) werden anschließend wiederum von der Signalaufbereitungseinheit 13 für die gemeinsame Datenübertragung zur übergeordneten Einheit 21 kombiniert und schließlich an der Kommunikationsschnittstelle 23 ausgegeben.

Optional kann die Signalverarbeitungseinheit 15 zusätzlich zu den positionsbasierten Triggersignalen p auch Triggersignale t erzeugen, durch die in der Positionserfassungsvorrichtung 17 das Erfassen von Positionsdaten P ausgelöst wird (vgl. den punktiert dargestellten Pfeil in Fig. 3). Bei dem Triggersignal t kann es sich insbesondere um ein zeitbasiertes Triggersignal handeln, das zyklisch erzeugt und ausgegeben wird, oder um einen Triggersignal, das in Reaktion auf eine Anforderung erzeugt und ausgegeben wird. Ein solches Triggersignal t ist aber nicht unbedingt erforderlich, da die Positionserfassungsvorrichtung 17 beispielsweise auch dazu ausgebildet sein kann, von sich aus fortlaufend Positionsdaten P zu erfassen und an die Signalverarbeitungseinheit 15 auszugeben.

Die in Fig. 4 gezeigte Ausführungsform ist der in Fig. 3 gezeigten Ausführungsform sehr ähnlich. Der wesentliche Unterschied besteht darin, dass bei der in Fig. 4 gezeigten Ausführungsform das positionsbasierte Triggersignal p nicht von der Signalverarbeitungseinheit 15, sondern gemäß der zweiten und dritten Variante der Erfindung von der Positionserfassungsvorrichtung 17 erzeugt wird. Wiederum kann es insbesondere zweckmäßig sein, wenn das positionsbasierte Triggersignal p immer bei Erreichen einer bestimmten Position erzeugt und ausgegeben wird. Dazu kann in der Positionserfassungsvorrichtung 17 eine entsprechende Logik vorgesehen werden. Die Signalverarbeitungseinheit 15 braucht dann nicht anhand der erfassten Positionsdaten P zu prüfen, ob die bestimmten Position erreicht wurde, und gegebenenfalls das positionsbasierte Triggersignal p zu erzeugen, sondern kann sich bei der zweiten Variante der Erfindung darauf beschränken, das positionsbasierte Triggersignal p von der Positionserfassungsvorrichtung 17 zu empfangen und es daraufhin möglichst unmittelbar an die Zusatzdatenerfassungsvorrichtung 19 auszugeben.

Alternativ kann gemäß der dritten Variante der Erfindung auch vorgesehen sein, dass die Positionserfassungsvorrichtung 17 das von ihr erzeugte positionsbasierte Triggersignal p direkt an die Zusatzdatenerfassungsvorrichtung 19 ausgibt, um dort das Erfassen von Zusatzdaten Z(p) auszulösen. Dies kann insbesondere zweckmäßig sein, wenn sowohl die Positionserfassungsvorrichtung 17 als auch die Zusatzdatenerfassungsvorrichtung 19 in die Datenbereitstellungsvorrichtung 11 integriert sind. Das direkte Ausgeben des positionsbasierten Triggersignals p von der Positionserfassungsvorrichtung 17 an die Zusatzdatenerfassungsvorrichtung 19 ist in Fig. 4 durch einen weiteren punktiert dargestellten Pfeil symbolisiert.

Es ist auch denkbar, dass eine einzelne Datenbereitstellungsvorrichtung 11 einerseits nach Art der in Fig. 2 gezeigten Ausführungsform und andererseits auch nach einer der in den Figuren 3 und 4 gezeigten Ausführungsformen betrieben werden kann. Dabei kann es zweckmäßig sein, die jeweilige Betriebsart von erfassten Positionsdaten P abhängig zu machen, vorzugsweise von der jeweiligen Geschwindigkeit eines Motors, dessen Positionsdaten P und Zusatzdaten Z erfasst werden. Beispielsweise kann vorgesehen sein, dass bei niedrigen Geschwindigkeiten unterhalb eines Geschwindigkeitsschwellenwertes die Signalverarbeitungseinheit 15 ein zeitbasiertes Triggersignal t erzeugt und synchronisiert an die Positionserfassungsvorrichtung 17 und an die Zusatzdatenerfassungsvorrichtung 19 ausgibt, um das Erfassen von Zusatzdaten Z(p) auszulösen, und dass bei hohen Geschwindigkeiten oberhalb des Geschwindigkeitsschwellenwerts das Erfassen der Zusatzdaten Z(p) stattdessen mittels eines positionsbasierten Triggersignals p ausgelöst wird, das von der Signalverarbeitungseinheit 15 oder von der Positionserfassungsvorrichtung 17 in Abhängigkeit von den erfassten Positionsdaten P erzeugt wird. Vorteilhafterweise wird in beiden Betriebsarten jeweils erreicht, dass die an die übergeordnete Einheit 21 ausgegebenen Positions- und Zusatzdaten P, Z(p) in der übergeordneten Einheit 21 nicht noch verrechnet werden müssen, um in einen definierten Bezug zueinander gebracht zu werden, sondern den definierten Bezug bereits aufweisen.

### Bezuqszeichen

- 11: Datenbereitstellungsvorrichtung
- 13: Signalaufbereitungseinheit
- 15: Signalverarbeitungseinheit
- 17: Positionserfassungsvorrichtung
- 19: Zusatzdatenerfassungsvorrichtung
- 21: übergeordnete Einheit
- 23: Kommunikationsschnittstelle
- 25: Kommunikationsschnittstelle
- p: positionsbasiertes Triggersignal
- t: zeitbasiertes Triggersignal
- P: Positionsdaten
- Z: Zusatzdaten

## Patentansprüche

1. Datenbereitstellungsvorrichtung (11) zum Bereitstellen von Positionsdaten (P) sowie von Zusatzdaten (Z) an eine übergeordnete Einheit (21),
wobei die Datenbereitstellungsvorrichtung (11) eine Signalaufbereitungseinheit (13) umfasst, die dazu ausgebildet ist, Positionsdaten (P) zu empfangen und Zusatzdaten (Z) zu empfangen, die Positionsdaten (P) und die Zusatzdaten (Z) für eine gemeinsame Datenübertragung miteinander zu kombinieren und sie anschließend kombiniert auszugeben,
wobei die Datenbereitstellungsvorrichtung (11) ferner eine Signalverarbeitungseinheit (15) umfasst, die dazu ausgebildet ist,
- von einer Positionserfassungsvorrichtung (17) Positionsdaten (P) zu empfangen und von einer Zusatzdatenerfassungsvorrichtung (19) Zusatzdaten (Z) zu empfangen,
- die Zusatzdaten (Z) in einen definierten, bevorzugt zeitlichen, Bezug zu den Positionsdaten (P) zu bringen und
- zumindest die Zusatzdaten (Z), vorzugsweise auch die Positionsdaten (P), anschließend an die Signalaufbereitungseinheit (13) auszugeben;
**dadurch gekennzeichnet,**
**dass** die Signalverarbeitungseinheit (15) dazu ausgebildet ist, in Abhängigkeit von den empfangenen Positionsdaten (P) ein positionsbasiertes Triggersignal (p) zu erzeugen und an die Zusatzdatenerfassungsvorrichtung (19) auszugeben.

2. Datenbereitstellungsvorrichtung (11) zum Bereitstellen von Positionsdaten (P) sowie von Zusatzdaten (Z) an eine übergeordnete Einheit (21),
wobei die Datenbereitstellungsvorrichtung (11) eine Signalaufbereitungseinheit (13) umfasst, die dazu ausgebildet ist, Positionsdaten (P) zu empfangen und Zusatzdaten (Z) zu empfangen, die Positionsdaten (P) und die Zusatzdaten (Z) für eine gemeinsame Datenübertragung miteinander zu kombinieren und sie anschließend kombiniert auszugeben,
wobei die Datenbereitstellungsvorrichtung (11) ferner eine Signalverarbeitungseinheit (15) umfasst, die dazu ausgebildet ist,
- von einer Positionserfassungsvorrichtung (17) Positionsdaten (P) zu empfangen und von einer Zusatzdatenerfassungsvorrichtung (19) Zusatzdaten (Z) zu empfangen,
- die Zusatzdaten (Z) in einen definierten, bevorzugt zeitlichen, Bezug zu den Positionsdaten (P) zu bringen und
- zumindest die Zusatzdaten (Z), vorzugsweise auch die Positionsdaten (P), anschließend an die Signalaufbereitungseinheit (13) auszugeben;
**dadurch gekennzeichnet,**
**dass** die Signalverarbeitungseinheit (15) dazu ausgebildet ist, von der Positionserfassungsvorrichtung (17) ein positionsbasiertes Triggersignal (p) zu empfangen und an die Zusatzdatenerfassungsvorrichtung (19) auszugeben.

3. Datenbereitstellungsvorrichtung nach Anspruch 2,
wobei die Datenbereitstellungsvorrichtung (11) die Positionserfassungsvorrichtung (17) umfasst und die Positionserfassungsvorrichtung (17) dazu ausgebildet ist, das positionsbasierte Triggersignal (p) zu erzeugen und an die Signalverarbeitungseinheit (19) auszugeben.

4. Datenbereitstellungsvorrichtung (11) zum Bereitstellen von Positionsdaten (P) sowie von Zusatzdaten (Z) an eine übergeordnete Einheit (21),
wobei die Datenbereitstellungsvorrichtung (11) eine Signalaufbereitungseinheit (13) umfasst, die dazu ausgebildet ist, Positionsdaten (P) zu empfangen und Zusatzdaten (Z) zu empfangen, die Positionsdaten (P) und die Zusatzdaten (Z) für eine gemeinsame Datenübertragung miteinander zu kombinieren und sie anschließend kombiniert auszugeben,
wobei die Datenbereitstellungsvorrichtung (11) ferner eine Signalverarbeitungseinheit (15) umfasst, die dazu ausgebildet ist,
- von einer Positionserfassungsvorrichtung (17) Positionsdaten (P) zu empfangen und von einer Zusatzdatenerfassungsvorrichtung (19) Zusatzdaten (Z) zu empfangen,
- die Zusatzdaten (Z) in einen definierten, bevorzugt zeitlichen, Bezug zu den Positionsdaten (P) zu bringen und
- zumindest die Zusatzdaten (Z), vorzugsweise auch die Positionsdaten (P), anschließend an die Signalaufbereitungseinheit (13) auszugeben;
**dadurch gekennzeichnet, dass**
die Datenbereitstellungsvorrichtung (11) die Positionserfassungsvorrichtung (17) umfasst und die Positionserfassungsvorrichtung (17) dazu ausgebildet ist, ein positionsbasiertes Triggersignal (p) zu erzeugen und an die Zusatzdatenerfassungsvorrichtung (19) auszugeben.

5. Datenbereitstellungsvorrichtung nach einem der vorstehenden Ansprüche, wobei die Signalverarbeitungseinheit (15) dazu ausgebildet ist, die Positionsdaten (P) in einen definierten, bevorzugt zeitlichen, Bezug zu den Zusatzdaten (Z) zu bringen und anschließend an die Signalaufbereitungseinheit (13) auszugeben.

6. Datenbereitstellungsvorrichtung nach einem der vorstehenden Ansprüche, wobei die Signalverarbeitungseinheit (15) dazu ausgebildet ist, die Zusatzdaten (Z) dadurch in einen definierten Bezug zu den empfangenen Positionsdaten (P) zu bringen, dass sie die empfangenen Positions- und Zusatzdaten (P, Z) miteinander verrechnet, vorzugsweise indem sie auf Basis der Positionsdaten (P) normierte Zusatzdaten (Z) errechnet.

7. Datenbereitstellungsvorrichtung nach einem der vorstehenden Ansprüche, wobei die Signalverarbeitungseinheit (15) dazu ausgebildet ist, ein gemeinsames, vorzugsweise zeitbasiertes, Triggersignal (t) für das Erfassen von Positionsdaten (P) und das Erfassen von Zusatzdaten (Z) zu erzeugen und synchronisiert an die Positionserfassungsvorrichtung (17) und an die Zusatzdatenerfassungsvorrichtung (19) auszugeben,
vorzugsweise wobei die Signalverarbeitungseinheit (15) dazu ausgebildet ist, das gemeinsame Triggersignal (t) zyklisch zu erzeugen.

8. Datenbereitstellungsvorrichtung nach einem der vorstehenden Ansprüche, wobei die Datenbereitstellungsvorrichtung (11) dazu ausgebildet ist, wahlweise in einer ersten Betriebsart, in der zeitbasierte Triggersignale (t) erzeugt und synchronisiert an die Positionserfassungsvorrichtung (17) sowie die Zusatzdatenerfassungsvorrichtung (19) ausgegeben werden, oder in einer zweiten Betriebsart, in der in Abhängigkeit von den Positionsdaten (P) positionsbasierte Triggersignale (p) erzeugt und an die Zusatzdatenerfassungsvorrichtung (19) ausgegeben werden, betrieben zu werden.

9. Datenbereitstellungsvorrichtung nach Anspruch 8,
wobei die Datenbereitstellungsvorrichtung (11) dazu ausgebildet ist, dass in Abhängigkeit von erfassten Positionsdaten (P), vorzugsweise in Abhängigkeit von einer aus den Positionsdaten (P) abgeleiteten Geschwindigkeit, automatisch zwischen der ersten und der zweiten Betriebsart umgeschaltet wird.

10. Datenbereitstellungsvorrichtung nach einem der vorstehenden Ansprüche, wobei die Datenbereitstellungsvorrichtung (11) die Zusatzdatenerfassungsvorrichtung (19) umfasst und die Zusatzdatenerfassungsvorrichtung (19) dazu ausgebildet ist, als Zusatzdaten (Z) Vibrationsdaten, Ultraschalldaten und/oder Temperaturdaten zu erfassen und an die Signalverarbeitungseinheit (15) auszugeben.

11. Datenbereitstellungsvorrichtung nach einem der Ansprüche 1 bis 9,
wobei die Datenbereitstellungsvorrichtung (11) die Zusatzdatenerfassungsvorrichtung (19) umfasst und die Zusatzdatenerfassungsvorrichtung (19) dazu ausgebildet ist, als Zusatzdaten (Z) Speicherwerte aus einem Speicher der Zusatzdatenerfassungsvorrichtung (19) auszulesen und an die Signalverarbeitungseinheit (15) auszugeben.

12. Datenbereitstellungsvorrichtung nach einem der vorstehenden Ansprüche, wobei die Datenbereitstellungsvorrichtung (11) ferner eine Kommunikationsschnittstelle (23) umfasst, die mit einer Kommunikationsschnittstelle (25) der übergeordneten Einheit (21) verbindbar ist und dazu ausgebildet ist, die kombinierten Positions- und Zusatzdaten (P, Z) von der Signalaufbereitungseinheit (13) zu empfangen und an die übergeordnete Einheit (21) zu übertragen.

13. Verfahren zum Bereitstellen von Positionsdaten (P) sowie von Zusatzdaten (Z) an eine übergeordnete Einheit (21) mit den folgenden Schritten:
- Erfassen von Positionsdaten (P) mittels einer Positionserfassungsvorrichtung (17);
- Erzeugen eines positionsbasierten Triggersignals (p) in Abhängigkeit von den Positionsdaten (P) mittels der Positionserfassungsvorrichtung (17) oder mittels einer Signalverarbeitungseinheit (15);
- Ausgeben des positionsbasierten Triggersignals (p) an eine Zusatzdatenerfassungsvorrichtung (19);
- in Reaktion auf das positionsbasierte Triggersignal (p), Erfassen von Zusatzdaten (Z) mittels der Zusatzdatenerfassungsvorrichtung (19);
- Kombinieren der Positionsdaten (P) und der Zusatzdaten (Z) für eine gemeinsame Datenübertragung mittels einer Signalaufbereitungseinheit (13); und
- Ausgeben der kombinierten Positions- und Zusatzdaten (P, Z) an die übergeordnete Einheit (21).

## Claims

1. A data provision apparatus (11) for providing position data (P) and additional data (Z) to a higher-ranking unit (21),
wherein the data provision apparatus (11) comprises a signal preparation unit (13) which is configured to receive position data (P) and to receive additional data (Z), to combine the position data (P) and the additional data (Z) with one another for a joint data transmission and to subsequently output them in a combined form,
wherein the data provision apparatus (11) further comprises a signal processing unit (15) which is configured
- to receive position data (P) from a position detection apparatus (17) and to receive additional data (Z) from an additional data acquisition apparatus (19),
- to bring the additional data (Z) into a defined relationship, preferably a temporal relationship, with the position data (P) and
- to subsequently output at least the additional data (Z), preferably also the position data (P), to the signal preparation unit (13),
**characterized in that**
the signal processing unit (15) is configured to generate a position-based trigger signal (p) in dependence on the received position data (P) and to output it to the additional data acquisition apparatus (19).

2. A data provision apparatus (11) for providing position data (P) and additional data (Z) to a higher-ranking unit (21),
wherein the data provision apparatus (11) comprises a signal preparation unit (13) which is configured to receive position data (P) and to receive additional data (Z), to combine the position data (P) and the additional data (Z) with one another for a joint data transmission and to subsequently output them in a combined form,
wherein the data provision apparatus (11) further comprises a signal processing unit (15) which is configured
- to receive position data (P) from a position detection apparatus (17) and to receive additional data (Z) from an additional data acquisition apparatus (19),
- to bring the additional data (Z) into a defined relationship, preferably a temporal relationship, with the position data (P) and
- to subsequently output at least the additional data (Z), preferably also the position data (P), to the signal preparation unit (13),
**characterized in that**
the signal processing unit (15) is configured to receive a position-based trigger signal (p) from the position detection apparatus (17) and to output it to the additional data acquisition apparatus (19).

3. A data provision apparatus according to claim 2,
wherein the data provision apparatus (11) comprises the position detection apparatus (17) and the position detection apparatus (17) is configured to generate the position-based trigger signal (p) and to output it to the signal processing unit (19).

4. A data provision apparatus (11) for providing position data (P) and additional data (Z) to a higher-ranking unit (21),
wherein the data provision apparatus (11) comprises a signal preparation unit (13) which is configured to receive position data (P) and to receive additional data (Z), to combine the position data (P) and the additional data (Z) with one another for a joint data transmission and to subsequently output them in a combined form,
wherein the data provision apparatus (11) further comprises a signal processing unit (15) which is configured
- to receive position data (P) from a position detection apparatus (17) and to receive additional data (Z) from an additional data acquisition apparatus (19),
- to bring the additional data (Z) into a defined relationship, preferably a temporal relationship, with the position data (P) and
- to subsequently output at least the additional data (Z), preferably also the position data (P), to the signal preparation unit (13),
**characterized in that**
the data provision apparatus (11) comprises the position detection apparatus (17) and the position detection apparatus (17) is configured to generate a position-based trigger signal (p) and to output it to the additional data acquisition apparatus (19).

5. A data provision apparatus according to any one of the preceding claims, wherein the signal processing unit (15) is configured to bring the position data (P) into a defined relationship, preferably a temporal relationship, with the additional data (Z) and to subsequently output said position data (P) to the signal preparation unit (13).

6. A data provision apparatus according to any one of the preceding claims, wherein the signal processing unit (15) is configured to bring the additional data (Z) into a defined relationship with the received position data (P) in that the signal processing unit (15) offsets the received position data and additional data (P, Z) against one another, preferably in that the signal processing unit (15) calculates additional data (Z) standardized on the basis of the position data (P).

7. A data provision apparatus according to any one of the preceding claims, wherein the signal processing unit (15) is configured to generate a common trigger signal (t), preferably a time-based trigger signal (t), for the acquisition of position data (P) and the acquisition of additional data (Z) and to output said trigger signal (t) in a synchronized manner to the position detection apparatus (17) and to the additional data acquisition apparatus (19), preferably wherein the signal processing unit (15) is configured to cyclically generate the common trigger signal (t).

8. A data provision apparatus according to any one of the preceding claims, wherein the data provision apparatus (11) is configured to be selectively operated in a first operating mode, in which time-based trigger signals (t) are generated and are output in a synchronized manner to the position detection apparatus (17) and the additional data acquisition apparatus (19), or in a second operating mode, in which position-based trigger signals (p) are generated in dependence on the position data (P) and are output to the additional data acquisition apparatus (19).

9. A data provision apparatus according to claim 8,
wherein the data provision apparatus (11) is configured such that a switch is automatically made between the first and the second operating mode in dependence on acquired position data (P), preferably in dependence on a speed derived from the position data (P).

10. A data provision apparatus according to any one of the preceding claims, wherein the data provision apparatus (11) comprises the additional data acquisition apparatus (19) and the additional data acquisition apparatus (19) is configured to acquire vibration data, ultrasound data and/or temperature data as additional data (Z) and to output them to the signal processing unit (15).

11. A data provision apparatus according to any one of the claims 1 to 9, wherein the data provision apparatus (11) comprises the additional data acquisition apparatus (19) and the additional data acquisition apparatus (19) is configured to read memory values from a memory of the additional data acquisition apparatus (19) as additional data (Z) and to output them to the signal processing unit (15).

12. A data provision apparatus according to any one of the preceding claims, wherein the data provision apparatus (11) further comprises a communication interface (23) which can be connected to a communication interface (25) of the higher-ranking unit (21) and which is configured to receive the combined position and additional data (P, Z) from the signal preparation unit (13) and to transmit them to the higher-ranking unit (21).

13. A method for providing position data (P) and additional data (Z) to a higher-ranking unit (21), comprising the following steps:
- acquiring position data (P) by means of a position detection apparatus (17);
- generating a position-based trigger signal (p) in dependence on the position data (P) by means of the position detection apparatus (17) or by means of a signal processing unit (15);
- outputting the position-based trigger signal (p) to an additional data acquisition apparatus (19);
- in response to the position-based trigger signal (p), acquiring additional data (Z) by means of the additional data acquisition apparatus (19);
- combining the position data (P) and the additional data (Z) for a joint data transmission by means of a signal preparation unit (13); and
- outputting the combined position data and additional data (P, Z) to the higher-ranking unit (21).

## Revendications

1. Dispositif de mise à disposition de données (11) pour la mise à disposition de données de position (P) ainsi que de données supplémentaires (Z) à une unité supérieure (21), le dispositif de mise à disposition de données (11) comprenant une unité de mise en forme de signaux (13) qui est conçue pour recevoir des données de position (P) et pour recevoir des données supplémentaires (Z), pour combiner entre elles les données de position (P) et les données supplémentaires (Z) pour une transmission de données commune et pour les délivrer ensuite de manière combinée,
le dispositif de mise à disposition de données (11) comprenant en outre une unité de traitement de signaux (15) qui est conçue pour :
- recevoir des données de position (P) d'un dispositif d'acquisition de position (17) et recevoir des données supplémentaires (Z) d'un dispositif d'acquisition de données supplémentaires (19),
- mettre les données supplémentaires (Z) dans une relation définie, de préférence temporelle, avec les données de position (P) et
- délivrer ensuite au moins les données supplémentaires (Z), de préférence également les données de position (P), à l'unité de mise en forme de signaux (13) ;
**caractérisé en ce que**
l'unité de traitement de signaux (15) est conçue pour générer, en fonction des données de position (P) reçues, un signal de déclenchement basé sur la position (p) et pour le délivrer au dispositif d'acquisition de données supplémentaires (19).

2. Dispositif de mise à disposition de données (11) pour mettre à disposition des données de position (P) ainsi que des données supplémentaires (Z) à une unité supérieure (21), le dispositif de mise à disposition de données (11) comprenant une unité de mise en forme de signaux (13) qui est conçue pour recevoir des données de position (P) et pour recevoir des données supplémentaires (Z), pour combiner entre elles les données de position (P) et les données supplémentaires (Z) pour une transmission de données commune et pour les délivrer ensuite de manière combinée,
le dispositif de mise à disposition de données (11) comprenant en outre une unité de traitement de signaux (15) qui est conçue pour :
- recevoir des données de position (P) d'un dispositif d'acquisition de position (17) et recevoir des données supplémentaires (Z) d'un dispositif d'acquisition de données supplémentaires (19),
- mettre les données supplémentaires (Z) dans une relation définie, de préférence temporelle, avec les données de position (P) et
- délivrer ensuite au moins les données supplémentaires (Z), de préférence également les données de position (P), à l'unité de mise en forme de signaux (13) ;
**caractérisé en ce que**
l'unité de traitement de signaux (15) est conçue pour recevoir du dispositif d'acquisition de position (17) un signal de déclenchement basé sur la position (p) et pour le délivrer au dispositif d'acquisition de données supplémentaires (19).

3. Dispositif de mise à disposition de données selon la revendication 2,
dans lequel le dispositif de mise à disposition de données (11) comprend le dispositif d'acquisition de position (17) et le dispositif d'acquisition de position (17) est conçu pour générer le signal de déclenchement basé sur la position (p) et pour le délivrer à l'unité de traitement de signaux (19).

4. Dispositif de mise à disposition de données (11) pour la mise à disposition de données de position (P) ainsi que de données supplémentaires (Z) à une unité supérieure (21), le dispositif de mise à disposition de données (11) comprenant une unité de mise en forme de signaux (13) qui est conçue pour recevoir des données de position (P) et pour recevoir des données supplémentaires (Z), pour combiner entre elles les données de position (P) et les données supplémentaires (Z) pour une transmission de données commune et pour les délivrer ensuite de manière combinée,
le dispositif de mise à disposition de données (11) comprenant en outre une unité de traitement de signaux (15) qui est conçue pour :
- recevoir des données de position (P) d'un dispositif d'acquisition de position (17) et recevoir des données supplémentaires (Z) d'un dispositif d'acquisition de données supplémentaires (19),
- mettre les données supplémentaires (Z) dans une relation définie, de préférence temporelle, avec les données de position (P) et
- délivrer ensuite au moins les données supplémentaires (Z), de préférence également les données de position (P), à l'unité de mise en forme de signaux (13) ;
**caractérisé en ce que**
le dispositif de mise à disposition de données (11) comprend le dispositif d'acquisition de position (17) et le dispositif d'acquisition de position (17) est conçu pour générer un signal de déclenchement basé sur la position (p) et pour le délivrer au dispositif d'acquisition de données supplémentaires (19).

5. Dispositif de mise à disposition de données selon l'une des revendications précédentes,
dans lequel l'unité de traitement de signaux (15) est conçue pour mettre les données de position (P) dans une relation définie, de préférence temporelle, avec les données supplémentaires (Z) et pour les délivrer ensuite à l'unité de mise en forme de signaux (13).

6. Dispositif de mise à disposition de données selon l'une des revendications précédentes,
dans lequel l'unité de traitement de signaux (15) est conçue pour mettre les données supplémentaires (Z) dans une relation définie avec les données de position (P) reçues en combinant entre elles les données de position et les données supplémentaires (P, Z) reçues, de préférence en calculant des données supplémentaires (Z) normalisées sur la base des données de position (P).

7. Dispositif de mise à disposition de données selon l'une des revendications précédentes,
dans lequel l'unité de traitement de signaux (15) est conçue pour générer un signal de déclenchement commun (t), de préférence basé sur le temps, pour l'acquisition de données de position (P) et l'acquisition de données supplémentaires (Z) et pour le délivrer de manière synchronisée au dispositif d'acquisition de position (17) et au dispositif d'acquisition de données supplémentaires (19),
de préférence dans lequel l'unité de traitement de signaux (15) est conçue pour générer le signal de déclenchement commun (t) de manière cyclique.

8. Dispositif de mise à disposition de données selon l'une des revendications précédentes,
dans lequel le dispositif de mise à disposition de données (11) est conçu pour fonctionner au choix dans un premier mode de fonctionnement, dans lequel des signaux de déclenchement basés sur le temps (t) sont générés et délivrés de manière synchronisée au dispositif d'acquisition de position (17) ainsi qu'au dispositif d'acquisition de données supplémentaires (19), ou dans un deuxième mode de fonctionnement, dans lequel des signaux de déclenchement basés sur la position (p) sont générés en fonction des données de position (P) et délivrés au dispositif d'acquisition de données supplémentaires (19).

9. Dispositif de mise à disposition de données selon la revendication 8,
dans lequel le dispositif de mise à disposition de données (11) est conçu pour que, en fonction des données de position (P) acquises, de préférence en fonction d'une vitesse déduite des données de position (P), il se produise une commutation automatique entre le premier et le deuxième mode de fonctionnement.

10. Dispositif de mise à disposition de données selon l'une des revendications précédentes,
dans lequel le dispositif de mise à disposition de données (11) comprend le dispositif d'acquisition de données supplémentaires (19) et le dispositif d'acquisition de données supplémentaires (19) est conçu pour acquérir, en tant que données supplémentaires (Z), des données de vibration, des données d'ultrasons et/ou des données de température et pour les délivrer à l'unité de traitement de signaux (15).

11. Dispositif de mise à disposition de données selon l'une des revendications 1 à 9,
dans lequel le dispositif de mise à disposition de données (11) comprend le dispositif d'acquisition de données supplémentaires (19) et le dispositif d'acquisition de données supplémentaires (19) est conçu pour lire, en tant que données supplémentaires (Z), des valeurs de mémoire dans une mémoire du dispositif d'acquisition de données supplémentaires (19) et pour les délivrer à l'unité de traitement de signaux (15).

12. Dispositif de mise à disposition de données selon l'une des revendications précédentes,
dans lequel le dispositif de mise à disposition de données (11) comprend en outre une interface de communication (23) qui peut être reliée à une interface de communication (25) de l'unité supérieure (21) et qui est conçue pour recevoir les données de position et les données supplémentaires (P, Z) combinées de l'unité de traitement de signaux (13) et pour les transmettre à l'unité supérieure (21).

13. Procédé de mise à disposition de données de position (P) ainsi que de données supplémentaires (Z) à une unité supérieure (21), comprenant les étapes consistant à :
- acquérir des données de position (P) au moyen d'un dispositif d'acquisition de position (17) ;
- générer un signal de déclenchement basé sur la position (p) en fonction des données de position (P) au moyen du dispositif d'acquisition de position (17) ou au moyen d'une unité de traitement de signaux (15) ;
- délivrer le signal de déclenchement basé sur la position (p) à un dispositif d'acquisition de données supplémentaires (19) ;
- en réaction au signal de déclenchement basé sur la position (p), acquérir des données supplémentaires (Z) au moyen du dispositif d'acquisition de données supplémentaires (19) ;
- combiner les données de position (P) et les données supplémentaires (Z) pour une transmission de données commune au moyen d'une unité de mise en forme de signaux (13) ; et
- délivrer les données de position et les données supplémentaires (P, Z) combinées à l'unité supérieure (21).
